# DEMANDE DE BREVET EUROPEEN

(11) **EP 1 186 338 A1**
(43) Date de publication de la demande: **13.03.2002**
(21) Numéro de dépôt: 01402320.4
(22) Date de dépôt: 07.09.2001
(51) Int. Cl.: B01F 3/12, B09B 3/00

(54) **Procédé et dispositif pour le traitement des déchets**

(30) Priorité: 08.09.2000 FR 0011479
(71) Demandeur: Heidelberger, Alain M., 75016 Paris (FR)
(72) Inventeur: Heidelberger, Alain, 75016 Paris (FR)
(74) Mandataire: Grynwald, Albert

(57) **Abrégé**

L'invention concerne un procédé et un appareil (10) pour le traitement de(s) déchet(s) (13,15) non fluide(s) ou non pompable (s).

Ce procédé et cet appareil (10) sont caractérisés en ce que, le(s) déchet(s) (13,15) comprenant au moins une phase liquide, on soumet ce(s) déchet(s) (13,15) à un traitement physique de façon à créer des interactions de répulsions entre des particules solides et/ou des interactions d'attraction entre des particules solides et des particules liquides.

Ainsi, on transforme ce(s) déchet(s) (13, 15) traité(s) en une suspension ou en une solution colloïdale, cette suspension ou solution étant fluide, pompable, stable et homogène.

## Description

L'invention concerne un procédé et un dispositif pour le traitement des déchets.

Les déchets sont des sous-produits d'industries, par exemple chimiques, mécaniques ou agroalimentaires, et de collectivités telles que des ménages ou des stations d'épuration des eaux.

Ne présentant aucun intérêt, les déchets doivent être traités ou éliminés pour des raisons légales et/ou économiques.

Pouvant être composés de divers constituants, de taille et de consistance diverses, on distingue au moins trois catégories de déchets suivant leurs caractéristiques physiques:

Les déchets dits liquides, caractérisés par des propriétés élastiques permettant, par exemple, leur écoulement, mesurées suivant des paramètres tels que la viscosité.

Les déchets dits solides, caractérisés par leur rigidité, comprenant une sous-catégorie de déchets, dite de déchets solides granuleux, comprenant des déchets solides composés de particules dont le diamètre est inférieur à quelques centimètres. Cette sous-catégorie de déchets solides granuleux comprend tout déchet solide convenablement broyé.

Finalement, les déchets dits boueux, caractérisés par leur composition mixte d'au moins une phase liquide et d'au moins une phase solide, généralement du type granuleux, dans des proportions variables, conférant à ces déchets boueux des propriétés proches des déchets liquides ou des déchets solides suivant ces proportions. Ainsi, une boue à forte teneur en liquide s'écoule, tandis qu'une boue à forte teneur en solide est rigide.

Pour être traités ou éliminés, ces déchets liquides, solides ou boueux sont acheminés de leur site de production vers les sites de traitement ou d'élimination.

Les coûts de transport et de traitement de ces déchets sont alors fonction, entre autres facteurs, de leur consistance et/ou de leur maniabilité.

Par exemple, le stockage, la manutention et le transport de déchets pompables sont en général moins coûteux que les mêmes opérations pour des déchets non pompables similaires puisque l'utilisation d'une pompe facilite considérablement ces opérations.

De même, de nombreux traitements, comme la déshydratation ou la combustion des déchets, sont facilités lorsque les déchets traités sont fluides (grande surface d'échange, possibilité de faire du goutte à goutte, etc.).

De ce fait, les prix de traitement et de transport d'un déchet dépendent particulièrement de la fluidité et du caractère pompable ou non de ce déchet.

Malgré cette constatation, des quantités croissantes de déchets sont transformées en déchets non pompables ou non fluides, par exemple au moyen de pressage mécanique ou de déshydratation, dans le but de diminuer les tonnages de déchets transportés et traités.

C'est pourquoi, pour faciliter le transport et/ou le traitement des déchets non pompables ou non fluides, le procédé selon l'invention comprend un traitement physique pour rendre pompables et fluides ces déchets originellement non pompables ou non fluides.

L'invention concerne un procédé pour le traitement de(s) déchet(s) non fluide(s) ou non pompable(s), caractérisé en ce que le(s) déchet(s) comprenant au moins une phase liquide, on soumet ce(s) déchet(s) à un frottement par une surface se déplaçant à une vitesse périphérique supérieure à 1,5 m/s de façon à créer des interactions de répulsion entre des particules solides et/ou des interactions d'attraction entre des particules solides et des particules liquides, de façon à transformer ce(s) déchet(s) traité(s) en une suspension ou en une solution colloïdale afin que cette suspension ou solution soit fluide, pompable, stable et homogène.

Ce procédé permet de façon très simple de rendre fluides et pompables des déchets qui, à l'origine, ne présentent pas cette propriété.

Ainsi, le traitement ultérieur et/ou l'élimination des déchets traités selon l'invention est grandement facilité.

Il est possible qu'à l'origine un déchet ne comporte pas de phase liquide. Il suffit alors de lui ajouter une phase liquide avant le traitement physique.

De préférence, ce liquide est lui-même un déchet primaire.

On précise ici qu'on entend par "déchet primaire", un matériau qui, avant d'être soumis au traitement physique selon l'invention, constitue un produit devant être éliminé.

Ce procédé s'applique à tous les déchets existants. Il permet le traitement simultané de déchets d'origines très diverses.

Il est aussi important de noter que les déchets obtenus après le traitement physique selon l'invention sont stables et homogènes sur des périodes de plusieurs semaines ou de plusieurs mois selon les déchets traités.

Cette caractéristique est importante puisqu'un fluide présentant des dépôts est considéré comme un déchet inhomogène instable composé d'une phase liquide et d'une phase solide séparable après son dépôt complet. De ce fait, le coût de traitement de ce déchet fluide instable est alors plus élevé que pour un déchet fluide similaire ne présentant pas de dépôts.

Avantageusement, la stabilité obtenue par le traitement physique conforme à l'invention est suffisante pour que le déchet ou le mélange de déchets soit considéré après le traitement comme une seule phase fluide, homogène et pompable lors de ses transports et de ses traitements ultérieurs.

Dans un mode de réalisation, on soumet ce(s) déchet(s) à un frottement par une surface se déplaçant à une vitesse périphérique inférieure à 100 m/s, de préférence de l'ordre de 20 m/s.

Par ailleurs, selon un mode de réalisation, les déchets traités comprennent des particules solides dont la plus grande dimension est inférieure à quelques centimètres, de préférence inférieure à 10 cm. Ainsi, la suspension des particules solides est plus facilement atteinte et plus durable que dans le cas de particules ayant une dimension supérieure.

Toutefois, le traitement physique peut comprendre une étape de fragmentation des déchets solides comprenant des particules solides dont la plus grande dimension est supérieure à 10 cm.

Dans ce cas, le traitement peut s'appliquer à tout déchet solide convenablement broyé afin que la plus grande dimension soit inférieure à quelques centimètres, de préférence inférieure à 10 cm.

Dans un mode de réalisation, la phase liquide, ou une partie de la phase liquide, provient d'un ajout introduit dans un déchet ou dans un mélange de déchets avant le traitement physique.

L'invention concerne aussi un appareil permettant d'appliquer le procédé ci-dessus au traitement de(s) déchet(s) non fluide(s) ou non pompable(s) comprenant une phase liquide.

Dans une réalisation, un tel appareil comprend une surface de frottement de(s) déchet(s) et des moyens pour déplacer le(s) déchet(s) relativement à la surface de frottement à une vitesse périphérique supérieure à 1,5 m/s de façon à transformer le(s) déchet(s) en une suspension ou en une solution colloïdale, cette suspension ou solution étant fluide, pompable, stable et homogène.

Dans une réalisation, la surface de frottement se déplace à une vitesse périphérique inférieure à 100 m/s, de préférence de l'ordre de 20 m/s.

Dans un mode de réalisation préféré, on prévoit que l'appareil comprenne des moyens pour créer un écoulement laminaire des déchets dans le récipient. Ainsi, l'homogénéité du mélange est fortement favorisée.

Dans une autre réalisation, la surface de frottement de l'appareil est sensiblement plane. Par exemple, elle peut être constituée par la face d'un disque entraîné en rotation autour de l'axe de ce disque.

Pour faciliter l'écoulement laminaire des déchets, dans une réalisation, le récipient présente une forme générale cylindrique et la surface de frottement est entraînée en rotation autour d'un axe pratiquement confondu avec l'axe du récipient.

D'autres caractéristiques et avantages de l'invention apparaîtront avec la description de certains de ses modes de réalisation, celle-ci étant effectuée, à titre non-limitatif, en se référant aux dessins ci-annexés parmi lesquels :
la figure 1 est une vue d'ensemble d'un dispositif conforme à l'invention, et
la figure 2 est une vue montrant des particules de déchets lors de la mise en oeuvre du procédé conforme à l'invention.

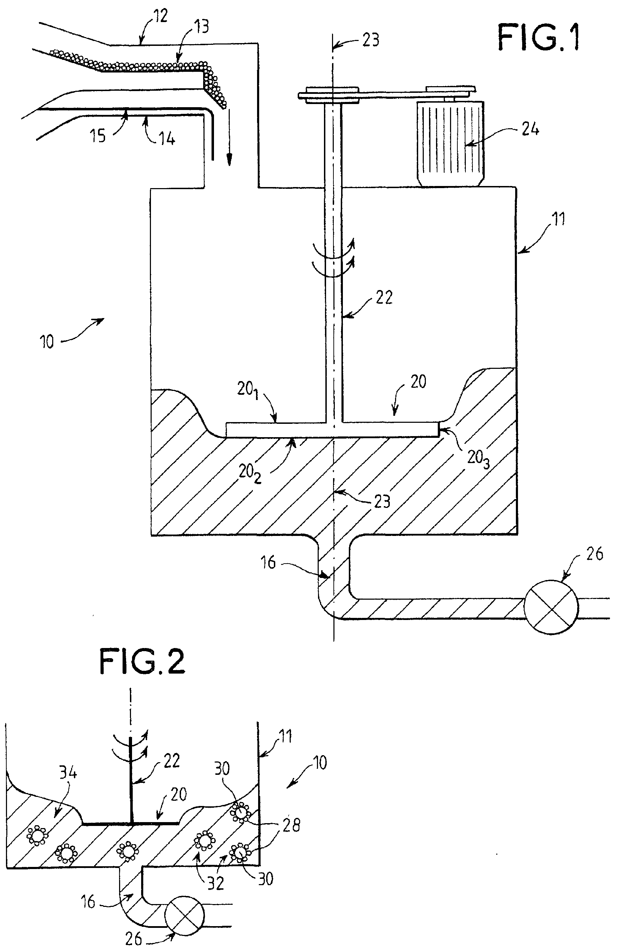

Dans l'exemple de la figure 1, pour mettre en place le procédé selon l'invention, on prévoit un appareil 10 qui comprend un récipient 11 à deux entrées 12 et 14 de déchets, et un disque 20, mis en rotation autour de son axe 23 par un moteur 24, au moyen d'un arbre 22 selon l'axe 23. La sortie 16 du récipient 11 est reliée à une pompe d'évacuation 26.

Les déchets introduits dans le récipient 11 sont liquides, solides et/ou boueux.

Dans l'exemple de la figure 1, deux composés 13 et 15 sont introduits dans l'appareil 10 par les entrées, respectivement, 12 et 14.

Le déchet 13 est un déchet solide granuleux, telle qu'une terre de filtration gorgée de produit chimique organique et le déchet 15 est un déchet liquide, tel qu'un hydrocarbure.

Lorsque ces déchets 13 et 15 sont introduits dans le récipient 11, ils forment un mélange inhomogène, non fluide ou non pompable.

Grâce au traitement physique conforme à l'invention, ce mélange se transforme en un mélange fluide et pompable.

Dans l'exemple, on traite une masse de déchets comprise entre 500 et 1 500 kg et le disque 20 présente un diamètre inférieur à 2 mètres, tournant à une vitesse périphérique comprise entre 10 et 20 mètres par seconde. Ce disque 20 est en un matériau quelconque, par exemple en métal tel que de l'acier, en une matière plastique ou en tout autre matériau ou assemblage ou mélange ou alliage de matériaux. Le disque présente des surfaces planes 20₁ et 20₂ et un rebord régulier 20₃.

Dans une réalisation, les surfaces 20₁, 20₂ et/ou 20₃ sont rugueuses et/ou présentent des dents.

Au contact du disque 20, les déchets qui viennent d'être introduits sont soumis à une impulsion qui améliore leur mélange.

Au fur et à mesure que les déchets 13 et 15 se mélangent, il se crée un écoulement laminaire rapide de ces déchets autour du disque. Cet écoulement favorise le mélange des déchets et permet l'obtention, au bout d'un temps, de l'ordre de 5 à 30 minutes, d'un mélange de déchets qui est fluide, homogène et stable.

On a constaté que l'utilisation d'une surface de frottement de grande aire vis-à-vis de la quantité de déchets, ou de la section du récipient, et la création d'un écoulement laminaire rapide dans le récipient contribuent à obtenir un mélange fluide, homogène et stable.

En particulier, on a observé que lorsqu'on fait appel à une hélice, une lame ou un fouet, le mélange des déchets obtenu est fluide, mais n'est pas stable et homogène, contrairement au résultat obtenu lors de l'utilisation d'un élément de frottement de grande surface, tel qu'un disque.

Cette différence de résultat se traduit lors du traitement par une différence d'écoulement du déchet ou des déchets dans le récipient. Par exemple, avec l'utilisation d'une hélice, l'écoulement des déchets dans le récipient reste turbulent ou ne se produit pas, tandis que l'utilisation d'un élément de grande surface tel qu'un disque crée un écoulement laminaire.

L'écoulement laminaire du(des) déchet(s) confère à ce(s) dernier(s) des vitesses d'écoulement très élevées dans le récipient, en particulier au voisinage du disque. Les particules solides sont alors dispersées de façon remarquablement homogène dans la matrice fluide et/ou liquide.

L'ensemble des matériaux tournant autour du disque avec une vitesse angulaire décroissante au fur et à mesure qu'on s'éloigne de ce dernier - le long de l'axe 23 -, il se produit des contraintes internes dans les déchets ainsi traités.

La combinaison de l'écoulement laminaire et des contraintes internes provoque un frottement particulièrement important entre les particules solides dont la granulométrie moyenne diminue en conséquence (si elles ne sont pas trop dures).

Cette diminution de la granulométrie moyenne est un autre facteur favorable à la qualité recherchée des mélanges puisqu'elle favorise le maintien de la suspension finale obtenue.

Pour que l'écoulement soit laminaire et rapide, il est préférable qu'il présente une symétrie circulaire. On peut le favoriser en utilisant, de préférence, un récipient de forme cylindrique.

Des expériences ont montré que deux paramètres du procédé influençaient les résultats obtenus :

Premièrement, il est préférable de favoriser la perpendicularité de l'axe de frottement par rapport à la surface de frottement. C'est pourquoi, dans l'exemple, l'axe 23 est perpendiculaire à la surface du disque 22.

Deuxièmement, il est aussi préférable de favoriser le parallélisme entre la surface de frottement et les éléments du récipient pouvant favoriser l'écoulement laminaire des déchets lors du traitement. Pour cela, on peut, comme dans l'exemple de la figure 1, disposer la surface de frottement parallèlement au fond du récipient.

Les résultats obtenus avec l'invention peuvent s'expliquer par la formation d'une suspension polarisée lors du frottement rapide avec les surfaces du disque.

Selon cette hypothèse, le frottement des particules solides de déchet avec le disque et/ou avec d'autres particules solides induit une polarisation de ces dernières.

Ce phénomène de polarisation par frottement est bien connu, notamment lorsqu'on frotte une baguette de graphite avec de la laine, ou lors du frottement de l'air sur le bord des volets relevés à l'atterrissage des avions.

Dans ce cas, des électrons sont arrachés ou fournis aux particules solides provenant des déchets 13 et/ou 15 par ces forces de frottement lors du contact entre les particules solides et la surface du disque ou lors de l'écoulement rapide des particules solides.

Suivant cette explication, l'importance de la surface de frottement se comprend aisément et expliquerait pourquoi un élément tel qu'une hélice ne fournit pas de résultat satisfaisant. En effet, l'hélice repousse la matière de la surface de ses pales, ce qui entraîne une surface de frottement inférieure.

Toutefois, des résultats expérimentaux montrent que, toutes choses égales par ailleurs, l'efficacité du procédé est proportionnelle à la surface de frottement utilisée tant que cette surface reste inférieure à une surface limite, particulière à chaque procédé et aux déchets traités.

Au-delà de cette surface limite qui peut être déterminée empiriquement, l'accroissement de la surface de frottement utilisée n'entraîne pas une efficacité accrue pour le procédé.

Par ailleurs, on pense que plus le frottement est rapide et plus la polarisation est efficace, ce qui expliquerait l'intérêt d'un écoulement rapide des particules solides dans le récipient.

Les particules solides polarisées présentes dans les déchets sont toutes chargées avec le même signe à la suite du frottement avec la surface du disque. Il en résulte des répulsions électrostatiques entre particules solides, ces répulsions s'opposant à l'agglomération de ces particules et donc à la sédimentation.

De façon à conserver la neutralité électrique du milieu, il est probable que des particules fluides, au contact des particules solides polarisées, acquièrent la polarisation inverse.

Ces échanges de charges électriques créent des attractions électrostatiques entre particules solides et particules liquides qui s'opposent à (ou ralentissent) la sédimentation, par gravité, des particules solides.

On obtient donc une suspension de particules solides stabilisées par les interactions de répulsion entre particules solides et/ou les interactions d'attraction entre particules solides et particules liquides.

Il est aussi possible qu'un autre mécanisme se produise lorsque les déchets contiennent deux phases liquides dont l'une est polaire et l'autre est apolaire.

Dans ce cas, étant en présence de deux phases liquides non miscibles, hydrocarbure et eau par exemple, ayant des affinités physico-chimiques différentes, les particules de l'une des deux phases se polarisent presque exclusivement au détriment des particules de l'autre phase. Dans l'exemple choisi, l'hydrocarbure se polarise au détriment des particules aqueuses.

Dans cette situation, le récipient contient des particules solides, polarisées positivement, des particules liquides apolaires, polarisées négativement, et des particules liquides polaires.

La figure 2 montre l'évolution de cette situation.

Les particules d'hydrocarbure 28 "entourent" les particules solides 30 et forment ainsi des ensembles 32 maintenus par l'attraction électrostatique.

Toutefois, l'hydrocarbure n'étant pas miscible dans l'eau, ces ensembles 32 sont maintenus en suspension dans l'eau 34 par les forces de répulsion résultant de la différence de polarité entre les deux liquides.

Dès lors, le composé ainsi obtenu, du type solution colloïdale, possède les propriétés d'un fluide, stable et homogène, puisqu'il se comporte comme un liquide possédant des particules en suspension stable.

Il convient de noter que le frottement rapide crée un mouvement qui facilite le mélange, par exemple en permettant aux divers éléments de polarités opposées de s'associer en ensembles 32, ce mouvement permettant aussi de répartir les ensembles 32 de façon homogène dans le liquide.

La suspension ou la solution colloïdale obtenue peut être pompée pour être évacuée.

Le temps nécessaire au traitement varie sensiblement suivant les éléments introduits dans le récipient. En moyenne, un temps compris entre 5 minutes et 1 heure pour une masse de déchets comprise entre 500 et 1.500 kilogrammes est nécessaire.

La stabilité des fluides obtenus varie entre quelques jours et plusieurs mois. Il est toutefois possible de la prolonger au moyen de déchets adéquats, tels que des tensioactifs.

On donne ci-après quelques exemples de traitements réalisés avec le procédé selon l'invention :
1- Un sol humide et souillé d'hydrocarbures, par exemple du pétrole brut, présentant un aspect boueux rigide, a été converti en un fluide homogène et pompable. La stabilité de ce fluide étant seulement de quelques jours, elle est augmentée par un ajout tel que des tensio-actifs, par exemple le produit connu sous la marque Texapon.
2- Un déchet de matériaux de filtration, contenant de la silice pulvérulente, de l'eau et un résidu organique a été transformé en un fluide homogène, pompable et dont la stabilité peut atteindre plusieurs mois avec un ajout d'huile végétale lors de son traitement.
3- Des sédiments obtenus après une opération de centrifugation de boue chargée d'hydrocarbures ont été transformés en un fluide stable, homogène et pompable avec l'ajout d'hydrocarbures, telles que des huiles de moteur, et d'ajouts tels que des tensio-actifs, par exemple du Texapon.
4- Une boue de station d'épuration d'eau partiellement déshydratée à l'aide d'un filtre presse a été aussi convertie en un fluide stable, homogène et pompable.
5- Une boue de station d'épuration de papeterie partiellement déshydratée par un filtre à bande a été transformée de la même façon en un fluide stable, homogène et pompable.

Il convient de signaler que l'invention ne se limite pas à l'utilisation d'un récipient, par exemple de forme cylindrique, avec une surface de frottement telle que cette dernière est entraînée en rotation autour d'un axe pratiquement confondu avec l'axe du récipient. Ainsi, l'invention peut être mise en oeuvre avec un récipient et une surface de frottement dont les axes ne sont pas colinéaires.

## Revendications

1. Procédé pour le traitement de(s) déchet(s) (13, 15) non fluide(s) ou non pompable(s), **caractérisé en ce que** le(s) déchet(s) (13, 15) comprenant au moins une phase liquide (28, 34), on soumet ce(s) déchet(s) (13, 15) à un frottement par une surface se déplaçant à une vitesse périphérique supérieure à 1,5 m/s de façon à créer des interactions de répulsion entre des particules (30) solides et/ou des interactions d'attraction entre des particules (30) solides et des particules (28) liquides, de façon à transformer ce(s) déchet(s) (13, 15) traité(s) en une suspension ou en une solution colloïdale afin que cette suspension ou solution soit fluide, pompable, stable et homogène.

2. Procédé selon la revendication 1, **caractérisé en ce qu'**on soumet ce(s) déchet(s) (13, 15) à un frottement par une surface se déplaçant à une vitesse périphérique inférieure à 100 m/s, de préférence de l'ordre de 20 m/s.

3. Procédé selon la revendication 1 ou 2 **caractérisé en ce que** le (ou les) déchet(s) (13, 15) traité(s) comporte(nt) des particules (30) solides dont la plus grande dimension est inférieure à quelques centimètres, de préférence inférieure à 10 cm.

4. Procédé selon la revendication 1 ou 2, **caractérisé en ce que** le traitement physique comprend une étape de fragmentation de déchet(s) (13, 15) solide(s) afin que la plus grande dimension des particules (30) soit inférieure à quelques centimètres, de préférence inférieure à 10 cm.

5. Procédé selon l'une quelconque des revendications précédentes, **caractérisé en ce que** la phase liquide (28, 34), ou une partie de la phase liquide (28, 34) , est un ajout introduit dans le(s) déchet(s) (13, 15) primaire(s) avant le traitement.

6. Appareil (10) pour le traitement de(s) déchet(s) (13, 15) non fluide(s) ou non pompable(s), **caractérisé en ce que** ce(s) déchet(s) (13, 15) comprenant au moins une phase liquide (28, 34), l'appareil comporte une surface (20₁, 20₂, 20₃) de frottement pour le(s) déchet(s) (13, 15), et des moyens (24) pour déplacer le(s) déchet(s) relativement à la surface (20₁, 20₂, 20₃) de frottement à une vitesse périphérique supérieure à 1,5 m/s de façon à transformer le(s) déchet(s) (13, 15) en une suspension ou en une solution colloïdale, cette suspension ou solution étant fluide, pompable, stable et homogène.

7. Appareil selon la revendication 6 **caractérisé en ce que** la surface (20₁, 20₂, 20₃) de frottement se déplace à une vitesse périphérique inférieure à 100 m/s, de préférence de l'ordre de 20 m/s.

8. Appareil (10) selon la revendication 6 ou 7 **caractérisé en ce que** les moyens pour commander un déplacement relatif entre le(s) déchet(s) (13, 15) et la surface (20₁, 20₂, 20₃) de frottement comprennent des moyens pour créer un écoulement laminaire de(s) déchet(s) (13, 15) dans un récipient (11) où sont introduits le(s) déchet(s) (13, 15).

9. Appareil (10) selon l'une quelconque des revendications 6 à 8, **caractérisé en ce que** la surface de frottement (20₁, 20₂, 20₃) est sensiblement plane.

10. Appareil (10) selon la revendication 9, **caractérisé en ce que** la surface (20₁, 20₂, 20₃) de frottement constitue une face d'un disque (20) entraîné en rotation autour de son axe.

11. Appareil (10) selon l'une quelconque des revendications 6 à 10, **caractérisé en ce qu'**il comporte un récipient (11) présentant une forme générale cylindrique et **en ce que** la surface (201, 202, 203) de frottement est entraînée en rotation autour d'un axe (23) pratiquement confondu avec l'axe du récipient.
